# EUROPEAN PATENT SPECIFICATION

(11) **EP 4 113 459 B1**
(45) Date of publication and mention of the grant of the patent: **01.01.2025**
(21) Application number: 21206396.0
(22) Date of filing: 04.11.2021
(51) Int. Cl.: G06V 20/54, G06V 20/50, G06V 10/62, G06V 10/26, G06V 10/20

(54) **AI BASED MONITORING OF RACE TRACKS**
KI-BASIERTE ÜBERWACHUNG VON RENNBAHNEN
SURVEILLANCE DE PISTES DE COURSE BASÉE SUR L'IA

(30) Priority: 02.07.2021 EP 21183397
(43) Date of publication of application: 04.01.2023
(60) Divisional application: 24199783.2
(73) Proprietor: Fujitsu Technology Solutions GmbH, 80807 München (DE)
(72) Inventor: Schiffer, Stefan, 80807 München (DE); Naujeck, Marcel, 80807 München (DE)
(74) Representative: Epping - Hermann - Fischer

(56) References cited:
- US-A1- 2002 054 210
- US-A1- 2015 371 095
- US-A1- 2018 341 812

## Description

The present disclosure relates to a novel electronic processing method for monitoring of a race track and a monitoring system for a race track, such as race tracks used for professional and amateur car racing.

Race tracks, in particular car race tracks such as the North Loop of the Nürburgring often feature many turns, including blind corners, drops and significant elevation changes, making them challenging and thus potentially dangerous to drive at high speeds. Historically, in the event of an incident, such as a vehicle leaving the track, race marshals relied on radio communication and communication with others marshals on the track to relay such information back to one or more race controllers and make decisions regarding track safety. In absence of a direct line of sight, it was often difficult to assess and react to incidents quickly. With as many as several hundred vehicles simultaneously on the track, the speed and correctness of safety related decisions is crucial to protect drivers and spectators.

WO 2017/212232 A1 discloses a track monitoring apparatus and system. Specifically, it relates to a system and method for detecting whether one or more participant vehicles taking part in a race are on or have left a predetermined route or track. The system includes a series of indicating means which are provided in or on the track and detection means which are mounted on the vehicle. If the indicating means are detected by the detection means, this is taken as an indication that the vehicle has left the track and an alert or alarm can be generated and a penalty may be allocated against the identified vehicle.

US 6,020,851 A discloses another race monitoring system. The disclosed auto race monitoring system provides a race track with a ground positioning system which includes at least three transmitters, transmitting signals to be received by at least a pair of receivers in each of the race cars. Those receivers instantaneously determine their position and, accordingly, exact position and attitude of the race car upon the race track. This information, along with data respecting race car parameters such as vehicle speed, engine temperature and oil pressure, are sent by means of a transmitter to a receiver interconnected with a main frame computer, such that a viewer can select any particular race car which he desires to monitor at any particular time in the race.

US 2018/341812 A1 relates to methods and systems for automatically tracking and analyzing imagery data of at least one vehicle on a racetrack comprising. A video event management system with a plurality of video cameras positioned around a racetrack determines the presence of the at least one vehicle and based on a weighted event score corresponding to dynamics for the at least one vehicle and other objects captures video imagery and stills and generates at least one subframe. Excess video imagery data and excess stills data are discarded based on metadata of linked subframes.

While the above monitoring systems can be beneficial in race monitoring and control, they require specialized equipment to be installed within the vehicle and therefore not suitable for all types of races and racing vehicles. Moreover, due to the used specialized sensing technology, they are relatively expensive and difficult to implement, especially on large race tracks. Accordingly, there is a need to provide an improved monitoring system and method for race tracks, which are suitable for many types of races and race participants and, preferably, simple and cost-effective to implement.

The invention is defined by the attached set of claims. Further details of the disclosed methods, devices and system are provided in the following, which are helpful for understanding the claimed invention.

According to a first aspect, a method for monitoring of a race track, comprises the following steps:
- obtaining at least one sequence of images from a camera capturing at least one section of the race track;
- detecting at least one vehicle in the sequence of images using automatic pattern recognition, in particular automatic object recognition;
- re-identifying the at least one vehicle as a specific vehicle of a predetermined set of vehicles using embedding, comprising computing at least one reference embedding vector for the embedding based on at least one image taken when the at least one vehicle enters the race track or the monitored part of the race track;
- mapping of the re-identified vehicle to a corresponding digital twin in a digital representation of the race track;
- determining a first real-world position of the re-identified vehicle based on a mapping relationship and adding first position and timestamp information to the corresponding digital twin each time a first real-world position of a re-identified vehicle is determined, so as to store a track history of the respective vehicle in the digital representation of the race track, wherein the mapping relationship maps a plurality of pixel areas in the images of the at least one sequence of images to a corresponding plurality of real-world positions of the corresponding section of the race track captured by the camera;
- detecting of an anomaly along the race track based on a comparison of at least two images of the at least one sequence of images;
- classifying the detected anomaly as acceptable or inacceptable, wherein a detected anomaly (144) is classified as inacceptable, if it is classified, based on automatic pattern recognition, as vehicle part, oil, and/or gravel;
- determining a second real-world position of at least one inacceptable anomaly detected along the race track based on the mapping relationship, and adding second position and timestamp information to a corresponding digital representation of at least one inacceptable anomaly detected along the race track;
- correlating the first and second position and timestamp information, so as to identify a vehicle likely to have caused the at least one inacceptable anomaly; and
- displaying the position of detected vehicles and anomalies on a visual representation of the race track.

Optionally, the method further comprises:
- segmenting images of the sequence of images into different areas associated with the race track; and
- activating at least one warning device based on a first set of rules, wherein the first set of rules comprises at least one first rule triggering a first warning if the at least one detected vehicle is mapped to a first predefined area of the race track, such as a crash barrier or an out-of-bounds area.

Among others, the inventors have recognized that artificial intelligence (AI) based techniques, such as image segmentation, object detection and positioning, can be used to automate and thus speed up the detection of incidents on a race track. Moreover, the provision of a set of rules linking detection results with related actions can greatly increase flexibility and effectiveness of race track monitoring.

According to a second aspect, a monitoring system for a race track comprises one or more cameras, each camera having a field of view covering at least one section of the race track, an image capturing system configured to obtain at least one sequence of images from at least one of the cameras, and an image processing system comprising at least one processor. The processor is configured to perform the method according to the first aspect. Optionally, the system may comprises one or more warning devices configured to be activated when a first warning is triggered.

The disclosed monitoring system and method enable:
- automatic detection of critical situations along the track, including a deviation of a vehicle from the race track and/or collision with a guide plank, a loss of oil, a person or other object on the race track or the like;
- automatic reactions to critical situations, including activating warning and control signals, outputting messages on panels placed along the track, selecting, outputting and/or recording video footage of related sections of the race track;
- rule based definition and association of the automatic detection and/or automatic reactions;
- tracking of vehicles along the race track, including storage of the driven track; and
- automatic mapping of detected critical situations to one or more tracked vehicles involved in the critical situation; and/or
- automatic generation and cutting of video footage for a tracked vehicle.

The disclosed system implements the above features based on a combination of one or more of the following electronic processing techniques:
- at least parts of the race track are monitored by a series of video cameras to generate a sequence of images;
- predefined classes of objects, such as vehicles or (inacceptable) anomalies, such as vehicle parts, oil, and/or gravel, are detected in the sequence of images, e.g. using an AI based object identification algorithm such as a convolutional neural network (CNN), in particular a deep learning network (DLN);
- the sequence of images is analysed using segmentation, for example using a segmentation mask and/or a segmentation network to identify different parts of or along the race track, e.g. a driving surface, a lane, a track boundary, a crash barrier, a run-out area, an out-of-bounds area, a pit area, a viewing area, a tarmac area, a gravel area, a dirt area, a grassy area, and a forested area;
- the detected objects are mapped to the different parts of the race track;
- based on one or more set of rules, warning devices, such as flags or lights along the race track are activated either fully automatically or semi-automatically by alerting a race track official and/or race control to potentially dangerous situations, such as a race car crashing into a crash barrier, or an oil spill on the driving surface;
- real-world locations of detected and optionally identified vehicles and anomalies are computed based on triangulation and interpolation of known reference points in the captured images;
- detected vehicles are identified based on training data, for example by calculation of embedding vectors;
- digital twins of the vehicles are maintained in a digital model of the race track, comprising data such as the position or speed of each vehicle on the race track;
- detected anomalies are related to vehicles on the track, e.g. by comparing a trajectory of each car with the position and first occurrence of the detected anomaly; and/or
- image sequences related to selected events, such as crashes or other incidents, or selected vehicles may be gathered and cut automatically or may be provided to race control on request.

In the following, specific embodiments of the disclosed monitoring system and method are described with reference to the attached figures.
Figure 1 shows, in a schematic way, an image of a race track captured by a track-side camera.
Figure 2 shows a flow chart of a method for monitoring of a race track.
Figures 3A and 3B shows, sequences of images taken before, during and after detection of a vehicle on a segment of a race track.
Figure 4 shows, in a schematic way, detection of an anomaly on the segment of the race track of Figure 3.
Figure 5 shows, in a schematic way, a triangulation method for positioning a detected object within a scene.
Figures 6A to 6D show, in a schematic way, training and inference using embedding vectors for object re-identification.
Figure 7 shows, in a schematic way, a parameter space of an embedding vector used for vehicle re-identification.
Figure 8 shows, in a schematic way, the collaboration between an inferencing server and digital twin server based on images from a single camera.
Figure 9 shows, in a schematic way, the collaboration between the inferencing server and the digital twin server based on images from two cameras.
Figure 10 shows, in a schematic way, a system architecture of a monitoring system for a race track.

In the following, a specific system architecture and operating method for a race track monitoring system are described.

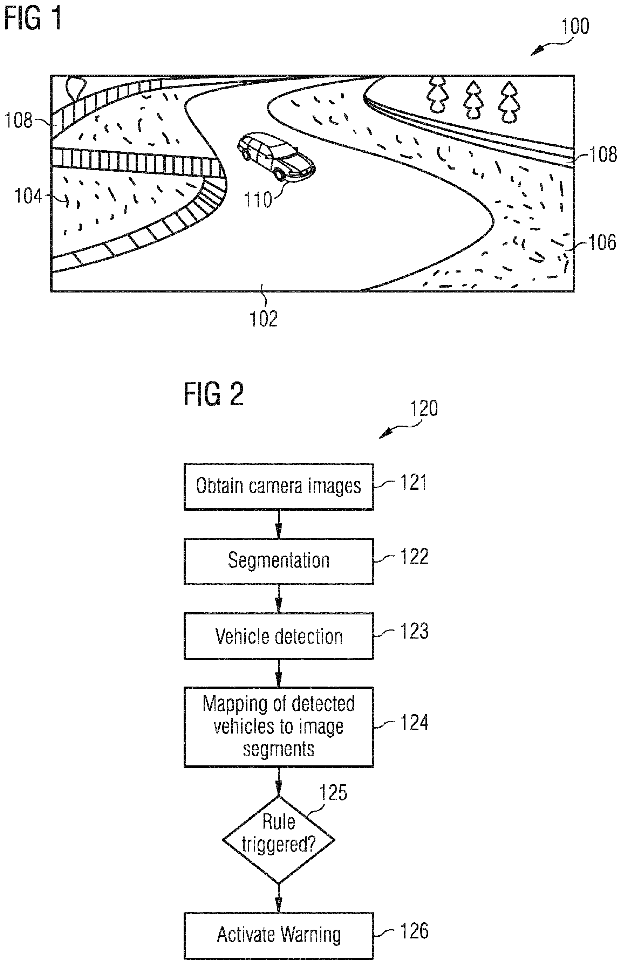

In the described system, one or more cameras provide video footage of all or part of a race track 100. As shown in Figure 1, based on predefined rules or appropriate training, an artificial intelligence (AI) system recognizes different areas of the captured footage, such as a driving surface 102, a grassy area 104, a gravel area 106 or a crash barrier 108 and divides images from the footage into corresponding segments.

In the described embodiment, the individual segments are detected automatically using a segmentation network, e.g. based on the so-called U-Net architecture or another type of convolutional neural network (CNN) trained beforehand using images of the race track taken by track-side camera. Compared to a potential static segmentation of camera images, this allows to cover for movements, panning and zooming of the track-side cameras. Optionally, feedback information from the camera control may be used to trigger a renewed segmentation of an image stream taken by a given camera whenever the camera moves, pans, zooms or the like. The output from the respective camera may not be used by the monitoring system, while the segmentation takes place. Moreover, to improve reliability, an initial segmentation maybe performed for each camera in a known default position. The output of the segmentation stage is a pixel mask. For each pixel, the likelihood to belong to one of multiple possible classes of segments is computed. The pixel mask indicates, for each pixel, the most likely segment of the race track 100, such as the driving surface 102, the grassy area 104, the gravel area 106 and the crash barrier 108.

Alternatively, in particular in case one or more cameras are mounted in fixed positions and with a fixed field of view, the segmentation may also be performed manually, i.e. statically, before the monitoring system is started. Moreover, it is also possible to provide a manual mask only for parts of a captured image, for example for parts that are known to lie outside the race track 100. Masking such parts may speed up or improve the quality of a subsequent segmentation. This is also referred to as semi-automatic segmentation.

Vehicles 110 on the race track are also recognized based on artificial intelligence. For example, known object detection algorithm based on publicly available training data may be used to detect vehicles 110. For example, a deep learning network (DLN) or other type of convolutional neural network (CNN) may be used to detect vehicles, people, animals, and other objects on the racing track 100. In the described system, the YOLO real-time object detection system is used for object detection. The detection precision can be improved by using additional training data captured on the relevant race track showing previous racing events and manually tagging vehicles 110 in the training data.

Based on the above steps, the disclosed system analyses in which segments the detected vehicles 110 are. This data is passed to a rule based system, which can trigger events and alarms based on predefined rules. For example, LED panels and warnings issued along the track 100 can be generated if a blocked vehicle, a foreign object on the race track, dirt or oil on the race track are detected.

Preferably, the system can distinguish between acceptable and inacceptable anomalies. Acceptable anomalies include deviations in the captured video footage, which are caused, for example, by reflections, rain, shadows and/or illumination beams. Inacceptable anomalies relate to lost parts of vehicles 110, oil and other operational fluids or gravel or soil spread, for example, from an adjoining area onto the race track. As described below, a convolutional neural network (CNN) may be used to detect entry and exit of a known type of object, such as a vehicle 110, in a given section of the race track.

Figure 2 shows, in the form of a flow chart, steps of a method 120 for monitoring of the race track 100.

In a step 121, at least one sequence of images is obtained from a camera capturing at least one section of the race track 100. In a step 122, an images of the sequence of images is segmented into different areas 102, 104, 106, and 108 associated with the race track 100. Segmentation may be performed based on a manually segmentation mask provided before the race starts, or an automatically or semi-automatically generated segmentation mask computed during initialisation, upon camera movements or in real-time. In a step 123, at least one vehicle 110 is detected in the sequence of images using automatic object recognition. The order of steps 122 and 123 may also be reverted, i.e. potentially moving objects may be detected first and used in aiding image segmentation process. In a step 124, the at least one detected vehicle 110 is mapped to at least one of the different areas 102, 104, 106 or 108 associated with the race track 100. In a decision step 125, it is determined whether at least one rule from a set of rules is triggered. The set of rules comprises at least one first rule triggering a first warning if the at least one detected vehicle 110 is mapped to a first predefined area of the race track 100, e.g. a crash barrier 108. If not, the method continues in step 121 with obtaining and processing the next image. However, if in step 125 at least one rule from the set of rules is triggered, at least one warning device is activated in a step 126 based on the set of rules.

In the following, different aspects of the disclosed monitoring system and monitoring method are described in more detail.

Starting with the set of rules, this may comprises a plurality of predefined, individual rules for triggering a warning. Each rule may comprise one or more conditions, determining when the rule is triggered, and one or more actions that are performed when the rule is triggered. Note that not all rules may depend on the segmentation. For example, if an animal is detected anywhere in an image, a warning may be issued regardless of whether the animals is on the driving surface 102 or not. As specific examples, the set of rules may comprise the following rules:

| **Condition** | **Action** |
|---|---|
| Object *person* detected on segment *driving surface.* | Light *red* signal on trackside panel. |
| Object *vehicle* detected on segment *gravel area.* | Light *yellow* signal on trackside panel. |
| Object *oil spill* detected on segment *driving surface.* | Light *red* signal on trackside panel. |
| Object *vehicle* detected on segment *crash barrier.* | Display live camera signal on control monitor of race marshal. |

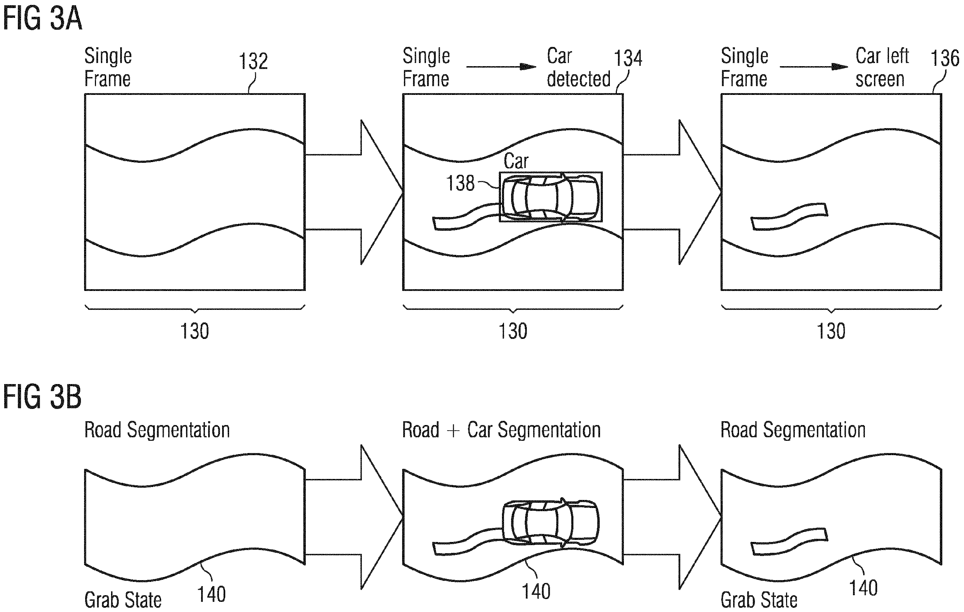

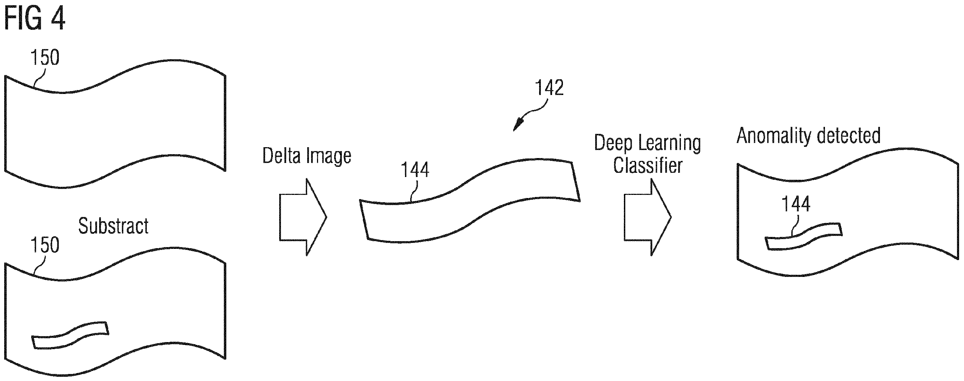

As shown in Figures 3A, 3B and 4, the detection of anomalies may be triggered whenever a vehicle 110 enters a monitored section 130 of the track 100. Thereafter, a differential analysis of the race track 100 before and after the vehicle 110 has passed the relevant section 130 of the track 100 can be performed. Again this detection may be based on artificial intelligence and suitable training data. For example, the system may be trained with the above acceptable anomalies as well as inacceptable anomalies based on previous race events and manual tagging of acceptable and inacceptable deviations in the historic footage.

In addition to the tagging of historic footage, anomalies may be artificially created, for example by placing a foreign object on the race track 100 and marking it as an inacceptable anomaly. To improve the detection rate, images of both acceptable and inacceptable anomalies should be taken in different weather conditions.

As shown in Figure 3A, a sequence of images 132, 134 and 136 shows the same section 130 of the race track 100 before, during and after passage of a vehicle 110 as detection by the object detection system. Processing may be triggered by the successful detection of a car or other vehicle 110 within the image 134 provided by a camera, and captured by a frame grabber. Once a vehicle 110 has been detected, the images 132 and 136 may be selected from the captured video material. For example, the last image in a time sequence of images taken before a bounding box 138 surrounding the detected vehicle 110 enters the section 130 may be selected as first image 132. Equally, the first image in the time sequence of images taken after the bounding box 138 surrounding the detected vehicle 110 leaves the section 130 may be selected as third image 136.

Figure 3B shows the same sequence of images 132, 134 and 134 after segmentation. In the depicted example, the used segmentation algorithm extracts only a single segment 140 corresponding to the driving surface 102 of the race track. As shown in the bottom middle, the detected vehicle 110 is positioned within the segment 140, i.e. on the race track 100. Thus, no alarm is raised at this stage.

As shown in Figure 4, once the detected vehicle 110 leaves the section 130, a comparison between segments of interest may be performed. In particular a delta image 142 between the segment 140 in the first image 132 and the same segment 140 in the third images 136 may be computed. The delta image 142 is classified using a deep learning classifier to decide whether the delta image corresponds to or comprises at least one known anomaly 144.

In the presented example, an oil spill left by the passing vehicle 110 is detected. Accordingly, a corresponding warning may be activated for all of the race track 100 or at least the section 130 comprising the anomaly 144. Depending on the severity of the detected anomaly and/or an associated uncertainty of the detection algorithm, the warning may be triggered automatically by the monitoring system, i.e. without human intervention, or displayed to a race marshal or similar official for verification, with the option to either raise or suppress the warning.

As a further feature, the positions of the vehicles 110 on the race track 100 may be determined and, optionally, tracked along the course. For this purpose, real-world positions, for example GPS coordinates of reference points visible in the monitored section 130 of the tracks 100, may be recorded. Then, based on triangulation and similar interpolation techniques, detected objects, such as vehicles 110 and anomalies 144 along the monitored section 130 of the track 100 can be related to the previously recorded position of reference points. That is to say, a reference point maps an image position defining a single pixel or a group of pixels, collectively referred to as pixel area, of a digital image of the race track 100 to a corresponding real-world position on the race track 100.

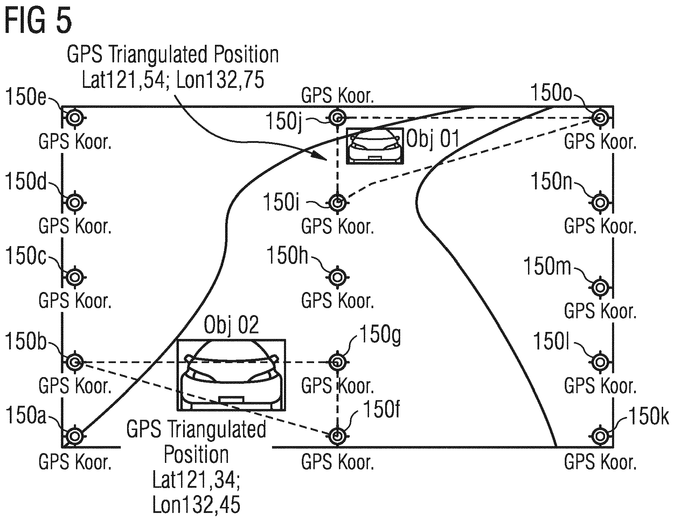

This is shown in detail in Figure 5. Within another section 130 of the race track 100, a total of 15 reference points 150 are provided. In the depicted example, the reference points 150 form a fixed grid of three times five reference points 150. This may be useful, for example, in case a position, direction and angle of a camera capturing the section 130 is fixed. In this case, during set-up or training, a GPS or similar position device with a visible marker may be placed at each reference point 150 in turn to determine its exact real-world position. Alternatively, the reference points 150 may coincide with prominent, high contrast features with in the section 130, i.e. edges or corners of segment boundaries, special objects like flagpoles or the like. Such reference points can be easily identified in a video image of the section 130, even if the camera moves, pans, or zooms in and out. Again, the real-world position of such prominent features is measured and stored during set-up or training, and used for triangulation during normal operation of the system.

In the situation depicted in Figure 5, two vehicle 110a and 110b have been detected in section 130. To determine their position, three or more reference points 150 in their vicinity are used to estimate their current position. As shown, reference points 150i, 150j and 150o closest to a centre of a first bounding box 138a of the first vehicle 110a are used to estimate the present position of the first vehicle 110a by triangulation. Similarly, reference points 150b, 150f and 150g closest to a centre of a second bounding box 138b of the second vehicle 110b are used to estimate the present position of the second vehicle 110b.

Accordingly, the position of detected vehicles 110 and anomalies 144 can be displayed on a visual representation of the race track 100, e.g. at the race control, where race officials work and decide on track warnings and potential interruptions of a race.

So far, a detection and optionally location of certain classes of objects, e.g. vehicles 110 and anomalies 144 was described. As detailed above, this is sufficient for generating safety warnings for the monitored race track 100. However, the described AI based monitoring system also enables some more advanced features, which are described below. In particular, it enables the re-identification of individual objects, e.g. a certain vehicle 110, on the race track. For the sake of clarity, the terms "object detection" or "object recognition" will be used to describe the mere detection of a certain type of object within a captured image, such as the presence of an arbitrary race car on a monitored section 130 of the race track 100. In contrast, the term "object re-identification" will be used to describe the identification of a unique entity, such as a preregistered race car of an individual race participant currently on the track.

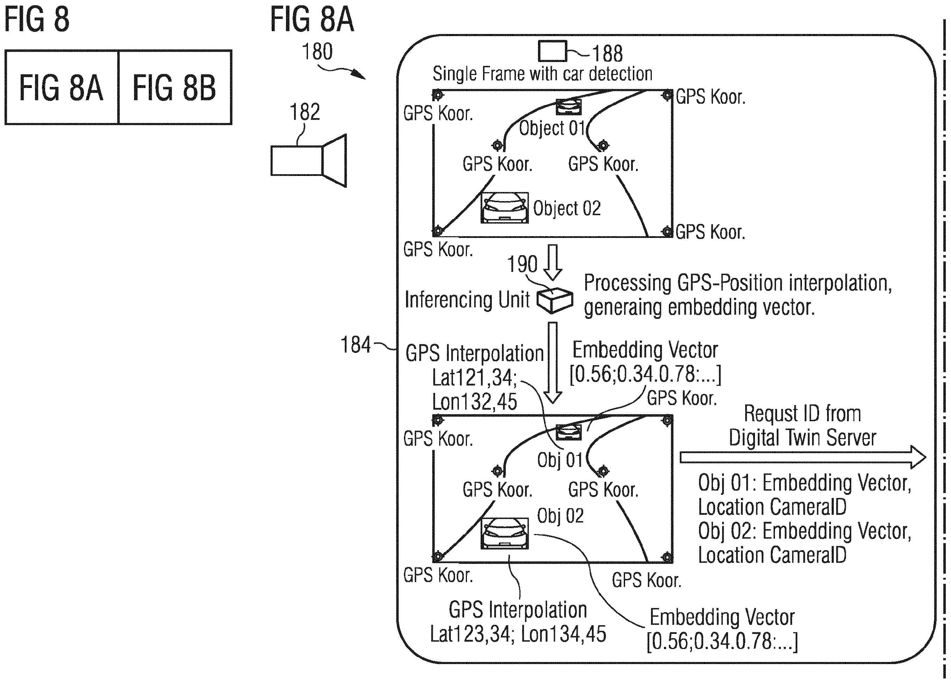

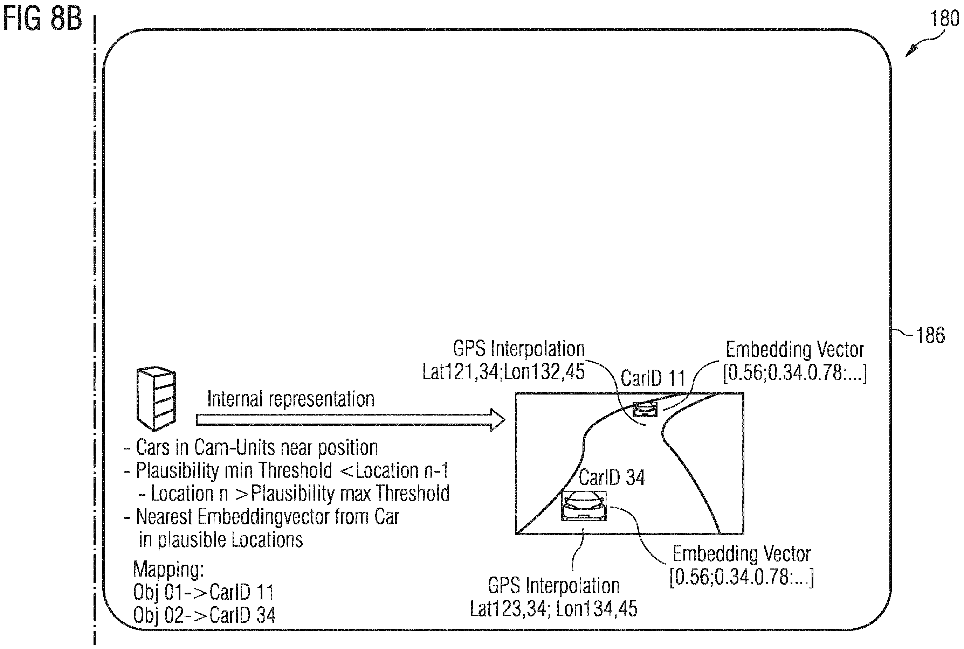

As an additional feature, in case that a digital model of the race track 100 is maintained by the monitoring system, the position of each vehicle 110 may be updated continuously, so as to create a so-called digital twin of the monitored vehicle 110 as shown, for example, in Figure 8 described later. In the described monitoring system, this is based on the re-identification of individual vehicles 110, rather than the mere detection of any vehicle 110 on the race track 100. Vehicles 110 may be distinguished based on extractable features, such as form, colour or other visible marks, such as logos or symbols printed on the vehicle 110. Suitable training data for the automatic identification may be captured at well-defined points of the race track 100. For example, images of an individual vehicle from different positions, e.g. from the front, rear or side of the vehicles 110, may be taken when the vehicle 110 enters the race track 100 at an entrance lane for the first time. In case only a part of the race track 100 is monitored, the training images may also be taken by one or more cameras monitoring a first section 130 of the race track 100. Based on this information, whenever a vehicle 110 is detected along the race track 100, the detected object can be compared to the previously captured image data, for example by inferencing and computation of an embedding vector. Additional information may be used to improve the detection ratio, for example OCR of registration plates, in case registered vehicles 110 are racing on the race track 100.

In the described embodiment, object re-identification is implemented using a neural network 160 that has been trained offline, i.e. before the use of the monitoring system in an actual race, using an encoder/decoder model to identify specific instances from a given class of objects, e.g. individual racing cars taking part in a currently running race. Different training sets may be used to train different instances of corresponding neural networks to different classes of objects, for example, Formula 1 cars, normal road cars, motorcycles or the like. Also, in case the specific properties of the objects to be identified change, e.g. due to rule changes for race competitors, training of the neural network 160 may be repeated.

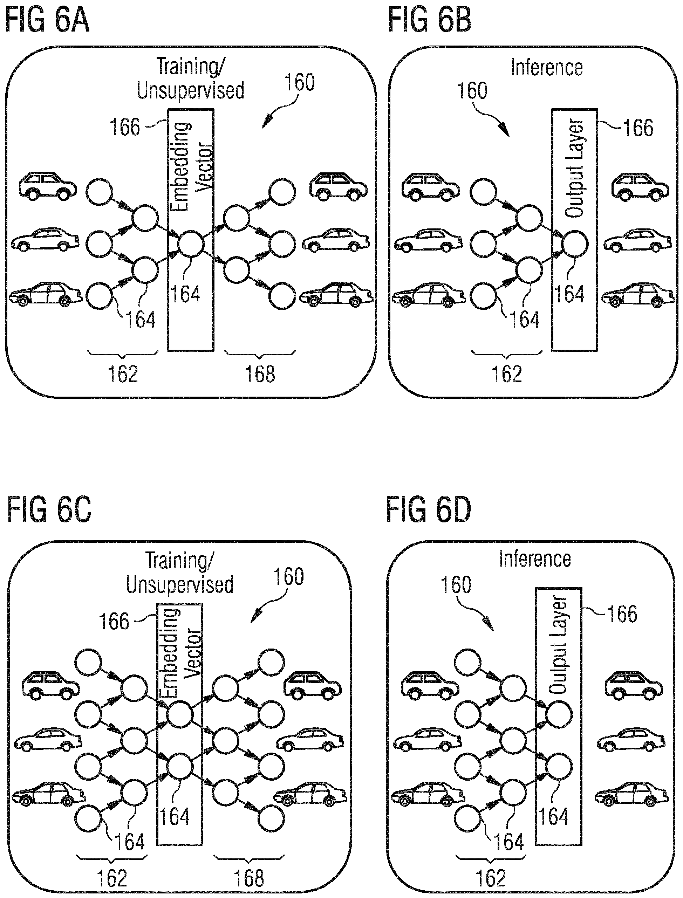

The training of the neural network 160 used for object identification is conceptually shown in Figures 6A and 6C. During a training stage, images of different vehicles 110 are provided to an encoder or input side 162 of the neural network 160. To achieve the desired accuracy, a high number of training images is used, which are selected or confirmed manually and are taken on the actual race track 100. For the described monitoring system, a set of about 17.000 vehicles extracted from archive footage of races on the Nürburgring was used to train the neural network 160 after a review of the material by a human.

During the actual training, information received on the input side is simplified by nodes 164 of the neural network 160 to form or encode an embedding vector 166. The information of the embedding vector 166 is decoded to recreate an image on a decoder or output side 168 of the neural network 160. Weights and other settings of the neural network 160 are varied until the images on the output side 168 resemble the images provided to the input side 162 to a high degree, e.g. until a difference between becomes very small or minimal. At that stage, the neural network has learned the characteristic features of vehicles 110 or a particular subclass of vehicles 110, such as racing cars. Comparison of the input side 162 and output side 168 can be performed automatically using an appropriate similarity metric. Thus, training of the neural network 160 may be performed unsupervised.

In the example of Figure 6A, the embedding vector 166 has only a single node 164, corresponding to a single dimension of information, e.g. the shape of an object. Figure 6C show another neural network 160 during training, with two nodes 164 forming the embedding vector 166, corresponding for example to a shape and a colour of the object of interest.

In practise, many more dimensions may be used to reliably identify an object such as a vehicle 110. In this context, attention is drawn to the fact that in racing often a relatively large number of very similar cars, e.g. cars of the same model, race each other, which may only differ by relatively minor details, such as colours, advertisements, presence and shape of auxiliary parts, such as spoilers etc. Thus, a multi-dimensional embedding vector 166 in a multi-dimensional feature space 170, having for example 168 independent dimensions is used in the described system. During unsupervised training, the most significant properties for re-identification of specific vehicles 110 corresponding to each one of the nodes 164 representing a dimension of the embedding vector 166 are determined automatically by the training algorithm. Thus, they may not correspond to high-level properties such as colour or shape, and may not be easily comprehensible by humans.

Once the neural network 160 is trained, it can be used to extract or infer the characteristic properties of previously unknown vehicles 110 online, e.g. in real-time during a race. This process is shown in Figures 6B and 6D showing the classification of input images to determine a shape, or a shape and a colour of a vehicle 110. This inference is used for object re-identification during track monitoring.

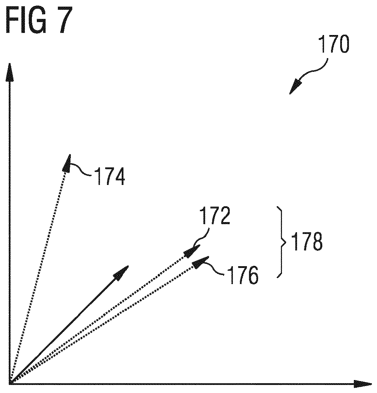

The process of initial registration and subsequent identification of a particular vehicle 110 is also shown in Figure 7. Before a vehicle 110 enters the race track 100, one or more images of the vehicle 110 are taken and processed by the previously trained neural network 160 to generate one or more corresponding embedding vectors 166. For example, a first vehicle 110a may correspond to a first embedding vector 172, and a second vehicle 110b may correspond to a second embedding vector 174 in a multi-dimensional feature space 170. In the described system, multiple images from different perspectives of the same vehicle 110, e.g. from the front, back and side, are used to create an array of possible embedding vectors, as described later.

Then, once the vehicles 110 are on the track, parts of an image corresponding to a detected vehicle 110 can be feed to the neural network to determine a new embedding vector 176. The new embedding vector 176 may then be compared with the previously registered vectors 172 and 174. The vehicle may then be identified as the vehicle corresponding to the closest previously known embedding vector, e.g. the first vehicle 110a corresponding to the first vector 172. Specifically, an angle between the new embedding vector and all pre-registered embedding vectors 172 and 174 is computed and the vector with the smallest angle, e.g. the first embedding vector 172, is selected as best matching vector.

Optionally, if the new embedding vector 176 differs from the closest previously registered vectors 172 or 174 by more than a first pre-set threshold value, the new vector may be stored in the system in an array of vectors 178 corresponding to a given vehicle 110. This may be used to improve future object identification, e.g. by adding embedding vectors 176 corresponding to an image of the same vehicle 110 taken from a different angle or under different environmental conditions, such as lighting or weather conditions. In the described system, up to 500 different embedding vectors can be stored for each registered vehicles. In general, this will make vehicle detection more likely and reliable.

Alternatively or in addition, if the new embedding vector 176 differs from each one of the previously registered vectors 172 and 174 by more than a second pre-set threshold value the identification may fail and/or the new embedding vector 176 is not included in the array of vectors 130. This may be used to exclude uncertain matches and/or to avoid degradation of the array of vectors 178.

The above vehicle detection and identification can be further improved if the entire track 100 is covered by video cameras. In this case, continuous tracking of each moving object will enable its detection even if some or all of its characteristics features are temporarily blocked. In case not all parts of the race track 100 are covered by respective cameras and/or if movable cameras are used and do not cover a vehicle 110 of interest at any given moment, based on a digital model of the race track 100, certain logical assumptions about the likelihood of a vehicle 110 appearing in a certain area of the race track 100 may be used to improve the detection precision.

Figure 8 shows a specific setup and operation of a monitoring system 180. The system 180 comprises a camera 182 capturing a corresponding section 130 of the race track 100. The system 180 further comprises an inferencing server 184 and a digital twin server 186.

The inferencing server 184 capture digital images or video frames provided by the camera 182 and stores them for later use. At least a subset of the captures images are fed into an AI based object detection 188 unit to identify predetermined types of objects, such as vehicles 110. As shown in Figure 8, each identified object is surrounded by a corresponding bounding box 138.

In addition, the detection unit 188 also performs segmentation of the received camera images. For example, the image of the track section 130 may be subdivide into areas corresponding to a driving surface 102, a grassy area 104 and a gravel area 106, respectively.

The inferencing server 184 further comprises an inferencing unit 190. The inferencing unit 190 is setup to determine the position of the detected vehicles based on GPS position interpolation using known reference points 150 within the section 130.

The inferencing unit 190 is further setup to generate an embedding vector for each detected vehicle 110 using the neural network 160. The determined embedding vector, together with a real-world position of the detected vehicle 110 on the race track 100 and/or an identifier of the camera, which captured the image, is passed to the digital twin server 186 for identification.

The digital twin server may use multiple plausibility checks to identify each of the vehicles 110a and 110b. Generally, the set of embedding vectors used for matching can be restricted to those vehicles 110 known to be on the track 100. Moreover, in a step 1, based on the identifier of the camera, it may only select a subset of vehicles 110 likely to be in view of that camera. This can be achieved, for example, by only considering vehicles that have already passed another camera located on an earlier section of the race track 100. For example, the subset of vehicles used in the identification process may be limited to vehicles that were last identified successfully in one of two or three sections of the track covered by other cameras. Including more than one up-track camera addresses the fact that some vehicles 110 may be covered in certain camera settings, or may not be identified successfully due to difficult light conditions or camera angles.

Alternatively or in addition, in a step 2, the selection may be refined based on the real-world positions provided by the inferencing server 184. For example, based on an estimated speed of a vehicle 110 in the digital model, only those vehicles which could have plausibly reached a certain real-world position within a captured image at the time the image was taken may be considered for matching.

Reduction of the number of vehicles 110 used during identification to a predetermined subset reduces the required processing power, and may thereby enable real-time identification with a relatively high resolution of input images during racing at high speeds. The higher resolution and reduction of plausible matches, also improves detection precision. For example, in cases where two very similar vehicles, e.g. of the same model and colour, are taking part in the same race, but are located on different sections 140 of the race track 100, object identification is greatly improved compared with general real-time identification engines.

In a step 3, after such filtering, the digital twin server selects the embedding vector that comes closets, in the multi-dimensional feature space 170, to the new embedding vector 176 provided by the inferring server 184 (see Figure 7) to identify the first vehicle 110a as a racing car with a given identifier, i.e. CarID 11, and the second vehicle 110b as another racing car with a given identifier, i.e. CarID 34.

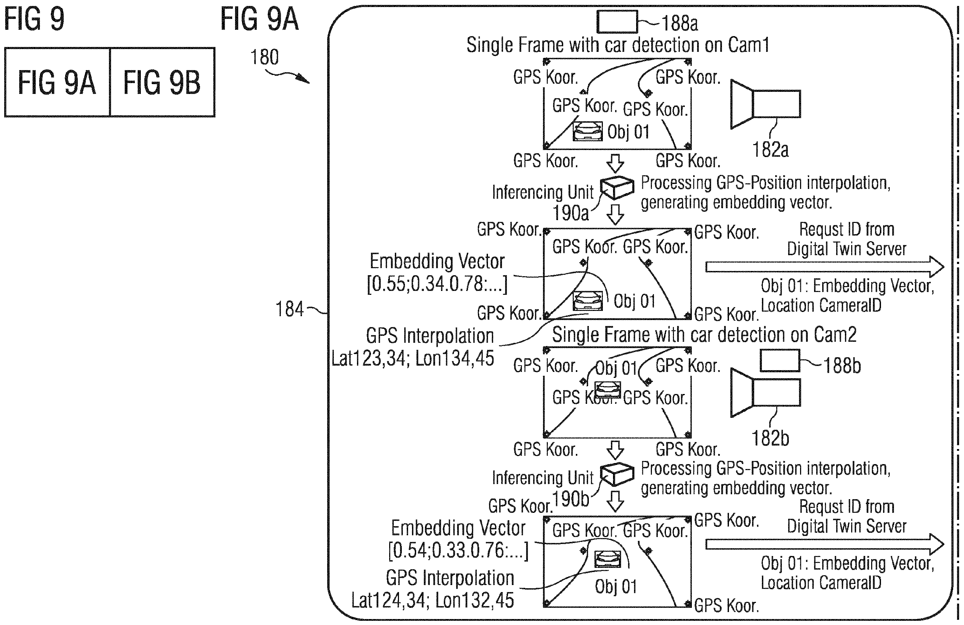

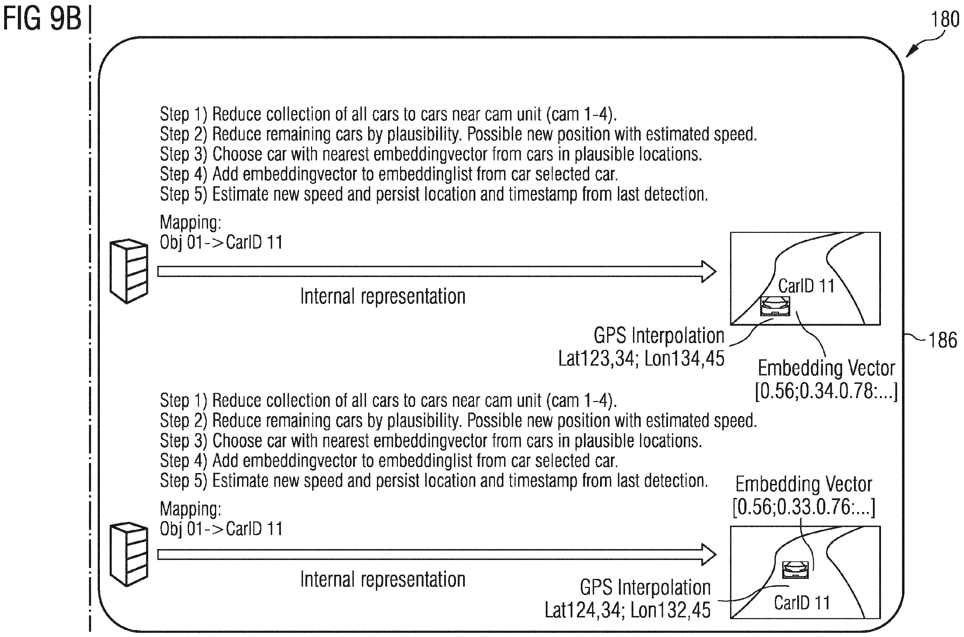

Figure 9 shows another configuration of the detection system 180, comprising two cameras 182a and 182b, corresponding to two different track sections 130a and 130b. For each location, essentially the same steps as those detailed above with respect to Figure 8 are performed. Details are not repeated here.

In addition, after successful identification of a vehicle 110, in a step 4, an array of vectors 178 used to represent the identified car is updated as described before with reference to Figure 7. In particular, the new embedding vector 176 is added to the array 178, if it differs significantly from all vectors in the array. In case the array 178 reaches a maximum size, another embedding vector may be deleted from the array, e.g. a vector quite similar to another vector of the array, or a vector lying entirely within the vector space defined by other vectors of the array 178.

Moreover, in a step 5, the information passed from the inference server 184 is then used to update a digital twin of the respective vehicles. For example, its last known location, speed, position in the race order, etc. may be updated based on the renewed identification of the vehicle at its new, present location. In the described system, all positions, estimated speeds, and other relevant information are stored persistently together with a time-stamp corresponding to the moment in time when a corresponding digital image was taken. In this way, the estimated position and speed of the vehicles can be shown live in the digital model. Moreover, a race can be reconstructed with the digital model, e.g. for race analysis, identification of drivers responsible for accidents or the anomalies 144 along the race track 100.

The above techniques also allow further functions to be implemented. For example, in the case that both anomalies 144 and vehicle trajectories are detected and maintained by the system 180, it is possible to identify a vehicle 110 responsible for an anomaly 144, such as a lost part or oil spill on the race track, and to hold the driver or owner of the vehicle 110 responsible.

Moreover, in the case that a driver or other person is interested in video footage of a particular event, such as a crash, or all available footage of a selected car on the race track 100, such video sequences can be selected and cut automatically and be provided to the interested party.

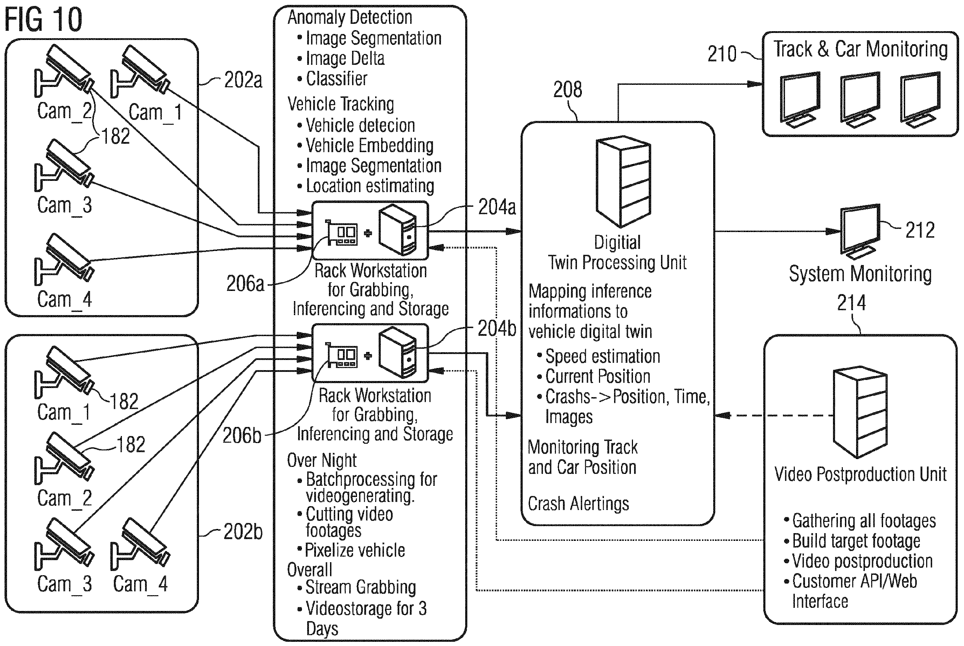

Figure 10 shows a potential architecture to implement the above functionality. However, as detailed above, each of the described functions can be implemented and used individually, if desired.

The monitoring system 180 of Figure 10 comprises two camera clusters 202a and 202b of four cameras 182a to 182d each. The cameras of each camera cluster 202 are connected to a corresponding rack workstation 204a and 204b, comprising one or more frame grabbing cards 206. Among other, the rack workstation 204 are responsible for grabbing essentially all video output of the respective camera cluster 202. In the described system, the video footage is stored for three days for analysis and post-processing as detailed below. In addition, the rack workstation 204 perform further, different tasks during race monitoring and at other times, when no race currently takes place.

At race time, the rack workstation 204 perform anomaly detection based on image segmentation, delta image computation and anomaly classification as detailed above. Moreover, the also perform vehicle tracking based on vehicle detection, vehicle embedding, image segmentation and location estimation as detailed above.

At other times, for example during the night, the perform computationally expensive tasks, such as batch processing for video generation, cutting of video footages for individual vehicles or drivers, and pixelisation of other vehicles or their registration numbers, e.g. for data protection.

A digital twin processing unit 208 maps the inference and other information provided by the rack workstation 204 to a corresponding digital twin of the race track 100 and/or each individual vehicle 110. In particular, it keeps track of a speed estimation and current position of each vehicle 110. It further records the position, time and corresponding images of any detected incident, in particular crash of any vehicle 110. The digital twin processing unit 208 further monitors a state of the race track 100 and the positions of the vehicles 110 on the track.

In the described embodiment, digital twin processing unit 208 also executes a rule engine. As explained before, the rule engine generates alerts corresponding to detected incidents, such as vehicles crashes, and may control flags, display and other notifications along the track. Further vehicle information may be provided from the digital twin to the rule engine. This enables to formulate rules based on dynamic properties of the monitored system. For example, a rule may be triggered if a calculated speed of a vehicle lies below or above a certain threshold.

The monitored track state and car positions are provided from the digital twin processing unit 208 to a track and car monitoring unit 210, e.g. for the benefit of race marshals or as information for the audience.

A system monitoring unit 212 is provided to control and review the operation of the monitoring system 180 itself. It may show operational state of the software and hardware components of the monitoring system.

Finally, a video postproduction unit 214 is provided, which is configured to gather all or selective footage from all the cameras 182, built target footage, e.g. of a specific vehicle 110 or vehicle group, e.g. the vehicles leading the race or involved in a particular incident, control video postproduction. It may also provide a customer API or web interface, allowing registered users to request and retrieve video material relevant to their own vehicle 110.

Compared with previous solutions, the described monitoring system is more flexible, as both the training data as well as the rules set for detection, classifying and triggering can be continuously updated. Moreover, it does not require the installation of specific hardware, such as RFID based transponders as used in professional races, on or in the vehicles taking part in a race. Accordingly, the described monitoring system is particularly useful for amateur races with private vehicles, rather than professional races.

### Reference signs

- 100: race track
- 102: driving surface
- 104: grassy area
- 106: gravel area
- 108: crash barrier
- 110: vehicle

- 120: monitoring method
- 121-126: method steps

- 130: section (of the race track)
- 132, 134, 136: image
- 138: bounding box

- 140: segment (of the image)
- 142: delta image
- 144: anomaly

- 150: reference point

- 160: neural network
- 162: input side
- 164: node
- 166: embedding vector
- 168: output side

- 170: multi-dimensional feature space
- 172: first embedding vector
- 174: second embedding vector
- 176: new embedding vector
- 178: array of vectors
- 180: monitoring system
- 182: camera
- 184: inferencing server
- 186: digital twin server
- 188: detection unit
- 190: inferencing unit

- 202: camera cluster
- 204: rack workstation
- 206: frame grabbing card
- 208: digital twin processing unit
- 210: track and car monitoring unit
- 212: system monitoring unit
- 214: video postproduction unit

## Claims

1. An electronic processing method (120) for monitoring of a race track (100), comprising:
- obtaining (121) of at least one sequence of images (132, 134, 136) from a camera (182) capturing at least one section (130) of the race track (100);
- detecting (123) at least one vehicle (110) in the sequence of images (132, 134, 136) using automatic object recognition;
- re-identifying the at least one vehicle (110) as a specific vehicle of a predetermined set of vehicles using embedding, comprising computing at least one reference embedding vector (172, 174) for the embedding based on at least one image taken when the at least one vehicle (110) enters the race track (100) or the monitored part of the race track (100);
- mapping (124) of the re-identified vehicle (110) to a corresponding digital twin in a digital representation of the race track (100);
- determining a first real-world position of the re-identified vehicle (110) based on a mapping relationship and adding first position and timestamp information to the corresponding digital twin each time a first real-world position of a re-identified vehicle (110) is determined, so as to store a track history of the respective vehicle (110) in the digital representation of the race track (100), wherein the mapping relationship maps a plurality of pixel areas in the images (132, 134, 136) of the at least one sequence of images to a corresponding plurality of real-world positions of the corresponding section (130) of the race track (100) captured by the camera (182);
- detecting of an anomaly (144) along the race track (100) based on a comparison of at least two images (132, 136) of the at least one sequence of images (132, 134, 136);
- classifying the detected anomaly (144) as acceptable or inacceptable, wherein a detected anomaly (144) is classified as inacceptable, if it is classified, based on automatic pattern recognition, as vehicle part, oil, and/or gravel;
- determining a second real-world position of at least one inacceptable anomaly (144) detected along the race track (100) based on the mapping relationship, and adding second position and timestamp information to a corresponding digital representation of at least one inacceptable anomaly (144) detected along the race track (100);
- correlating the first and second position and timestamp information, so as to identify a vehicle (110) likely to have caused the at least one inacceptable anomaly (144); and
- displaying the position of detected vehicles (110) and anomalies (144) on a visual representation of the race track (100).

2. The method (120) of claim 1, further comprising:
- segmenting (122) images of the sequence of images (132, 134, 136) into different areas associated with the race track (100); and
- activating (126) at least one warning device based on a first set of rules, wherein the first set of rules comprises at least one first rule triggering a first warning if the at least one detected vehicle (110) is mapped to a first predefined area of the race track (100), in particular a crash barrier (108) or an out-of-bounds area.

3. The method (120) of claim 2, wherein the areas of the race track (100) comprise at least one of the following: a driving surface (102), a lane, a track boundary, a crash barrier (108), a run-out area, an out-of-bounds area, a pit area, a viewing area, a tarmac area, a gravel area (106), a dirt area, a grassy area (104), and a forested area.

4. The method (120) of claim 2 or 3, further comprising:
- mapping of the detected anomaly (144) to at least one of the different areas associated with the race track (100); and
- activating at least one warning device based on a second set of rules, wherein the second set of rules comprises at least one second rule triggering a warning if the detected anomaly (144) is mapped to a second predefined area of the race track (100).

5. The method (120) according to one of claims 1 to 4, wherein the set of vehicles (110) comprises individual vehicles (110) taking part in a race, and re-identification of the at least one vehicle (110) is implemented using a neural network (160) that has been trained offline, in particular before the use of a monitoring system (180) to detect the at least one vehicle (110) in the sequence of images (132, 134, 136) in the race, using an encoder/decoder model to identify specific vehicles from a given class of objects, in particular one of Formula 1 cars, normal road cars, motorcycles.

6. The method (120) of claim 5, wherein training of the neural network (160) is performed unsupervised, and comprises the steps of:
- receiving images on an input side (162) of the neural network (160) and simplifying the received images by nodes (164) of the neural network (160) to form or encode an embedding vector (166);
- decode information of the embedding vector (166) to recreate an image on a decoder or output side (168) of the neural network (160);
- varying weights and other settings of the neural network (160) until a difference between the images received on the input side (162) and recreated-images becomes very small or minimal, based on an automatic comparison of the input side (162) and output side (168) using an appropriate similarity metric.

7. The method (120) of claim 5 or 6, further comprising:
- in a training stage, providing a high number of training images of different vehicles (110) to an encoder or input side (162) of the neural network (160), in particular training images selected or confirmed manually and taken on the race track (100);
- during an initial registration stage before the least one vehicle (110) enters the race track (100), taking and processing, by the previously trained neural network (160) the least one image of at least one vehicle (110) to compute the at least one reference embedding vector (172, 174); and
- during re-identification of the at least vehicle (110) once the at least vehicles (110) is on the race track (100), feeding parts of an image corresponding to the at least one detected vehicle (110) to the neural network (160) to determine a new embedding vector (176), comparing the new embedding vector (176) with a set of previously registered embedding vectors (172, 174), comprising the at least one reference embedding vector (172, 174), and identifying the at least vehicle (110) as the vehicle corresponding to the closest one of the set of previously registered embedding vectors (172, 174).

8. The method (120) of claim 7, wherein
- if the new embedding vector (176) differs from the closest previously registered embedding vectors (172, 174) by more than a first pre-set threshold value, the new embedding vector (176) is stored in an array of vectors (178) corresponding to a given vehicle (110).

9. The method (120) of claim 7 or 8, wherein
- if the new embedding vector (176) differs from each one of the previously registered embedding vectors (172, 174) by more than a second pre-set threshold value, failing the identification and/or not including the new embedding vector (176) in the array of vectors (178).

10. The method (120) according to one of claims 1 to 9, further comprising:
- extracting at least one characteristic feature, in particular a number plate or other registration number of the at least one vehicle (110), from the at least one image taken when the at least one vehicle (110) enters the race track (100) or the monitored part of the race track (100), wherein the at least one characteristic feature is used in the step of re-identifying the at least one vehicle (110).

11. The method (120) according to any one of claims 1 to 10, where the predefined set of vehicles (110) corresponds to a subset of all vehicles (110) having corresponding digital twins in the digital representation of the race track (100), and wherein the subset is selected based on a third set of rules providing a likelihood of re-identifying a given vehicle (110) in a sequence of images (132, 134, 136) corresponding to the at least one section (130) of the race track (100) based on the data of the corresponding digital twin.

12. The method (120) of any one of claims 1 to 11, further comprising:
- selecting a plurality of sequences of images (132, 134, 136) from a plurality of cameras (182) capturing different sections (130) of the race track (100) based on the re-identification of at least one specific vehicle (110) in each one of the plurality of sequences; and
- cutting the plurality of sequences to generate footage of the at least one specific vehicle (110) driving along the race track (100).

13. Monitoring system (180) for a race track (100), comprising:
- one or more cameras (182), each camera (182) having a field of view covering at least one section (130) of the race track (100);
- an image capturing system configured to obtain at least one sequence of images (132, 134, 136) from at least one of the cameras (182); and
- an image processing system comprising at least one processor, the processor being configured to perform the method according to one of claims 1 to 12.

14. The monitoring system (180) of claim 13, further comprising:
- one or more warning devices configured to be activated when a first warning is triggered based on a first set of rules, wherein the first set of rules comprises at least one first rule triggering a first warning if at least one detected vehicle (110) is mapped to a first predefined area of the race track (100), in particular a crash barrier (108) or an out-of-bounds area.

15. The monitoring system (180) of claim 13 or 14, further comprising:
- one or more warning devices configured to be activated when a second warning is triggered based on a second set of rules, wherein the second set of rules comprises at least one second rule triggering a warning if a detected anomaly (144) is mapped to a second predefined area of the race track (100).

## Patentansprüche

1. Ein elektronisches Verarbeitungsverfahren (120) zur Überwachung einer Rennstrecke (100), umfassend:
- Erhalten (121) von mindestens einer Bildsequenz (132, 134, 136) von einer Kamera (182), die mindestens einen Abschnitt (130) der Rennstrecke (100) erfasst;
- Erkennen (123) mindestens eines Fahrzeugs (110) in der Bildsequenz (132, 134, 136) durch automatische Objekterkennung;
- erneutes Identifizieren des mindestens einen Fahrzeugs (110) als ein spezifisches Fahrzeug eines vorbestimmten Satzes von Fahrzeugen unter Verwendung von Einbettung, umfassend das Berechnen mindestens eines Referenzeinbettungsvektors (172, 174) für die Einbettung auf der Grundlage mindestens eines Bildes, das aufgenommen wird, wenn das mindestens eine Fahrzeug (110) in die Rennstrecke (100) oder den überwachten Teil der Rennstrecke (100) einfährt;
- Zuordnung (124) des erneut identifizierten Fahrzeugs (110) zu einem entsprechenden digitalen Zwilling in einer digitalen Darstellung der Rennstrecke (100);
- Bestimmen einer ersten realen Position des erneut identifizierten Fahrzeugs (110) basierend auf einer Zuordnungsbeziehung und Hinzufügen von ersten Positions- und Zeitstempelinformationen zu dem entsprechenden digitalen Zwilling jedes Mal, wenn eine erste reale Position eines erneut identifizierten Fahrzeugs (110) bestimmt wird, um eine Streckenhistorie des jeweiligen Fahrzeugs (110) in der digitalen Darstellung der Rennstrecke (100) zu speichern, wobei die Zuordnungsbeziehung eine Mehrzahl von Pixelbereichen in den Bildern (132, 134, 136) der mindestens einen Bildsequenz auf eine entsprechende Mehrzahl von realen Positionen des entsprechenden Abschnitts (130) der Rennstrecke (100) abbildet, der von der Kamera (182) erfasst wird;
- Erkennen einer Anomalie (144) entlang der Rennstrecke (100) auf der Grundlage eines Vergleichs von mindestens zwei Bildern (132, 136) der mindestens einen Bildsequenz (132, 134, 136);
- Klassifizieren der detektierten Anomalie (144) als akzeptabel oder inakzeptabel, wobei eine detektierte Anomalie (144) als inakzeptabel klassifiziert wird, wenn sie, basierend auf automatischer Mustererkennung, als Fahrzeugteil, Öl und/oder Kies klassifiziert wird;
- Bestimmen einer zweiten realen Position von mindestens einer inakzeptablen Anomalie (144), die entlang der Rennstrecke (100) erfasst wurde, basierend auf der Zuordnungsbeziehung, und Hinzufügen von zweiter Positions- und Zeitstempelinformation zu einer entsprechenden digitalen Darstellung von mindestens einer inakzeptablen Anomalie (144), die entlang der Rennstrecke (100) erfasst wurde;
- Korrelieren der ersten und zweiten Positions- und Zeitstempelinformationen, um ein Fahrzeug (110) zu identifizieren, das wahrscheinlich die mindestens eine inakzeptable Anomalie (144) verursacht hat; und
- Anzeige der Position von erkannten Fahrzeugen (110) und Anomalien (144) auf einer visuellen Darstellung der Rennstrecke (100).

2. Das Verfahren (120) nach Anspruch 1, das ferner umfasst:
- Segmentieren (122) von Bildern der Bildsequenz (132, 134, 136) in verschiedene Bereiche, die der Rennstrecke (100) zugeordnet sind; und
- Aktivieren (126) mindestens einer Warnvorrichtung auf der Grundlage eines ersten Satzes von Regeln, wobei der erste Satz von Regeln mindestens eine erste Regel umfasst, die eine erste Warnung auslöst, wenn das mindestens eine detektierte Fahrzeug (110) einem ersten vordefinierten Bereich der Rennstrecke (100), insbesondere einer Leitplanke (108) oder einem Out-of-bounds-Bereich, zugeordnet ist.

3. Das Verfahren (120) nach Anspruch 2, wobei die Bereiche der Rennstrecke (100) mindestens eines der folgenden umfassen: eine Fahrbahnfläche (102), eine Fahrspur, eine Streckenbegrenzung, eine Leitplanke (108), einen Auslaufbereich, einen Out-of-bounds-Bereich, einen Boxenbereich, einen Zuschauerbereich, einen Asphaltbereich, einen Schotterbereich (106), einen Erdbereich, einen Grasbereich (104) und einen Waldbereich.

4. Das Verfahren (120) nach Anspruch 2 oder 3, ferner umfassend:
- Zuordnen der erkannten Anomalie (144) zu mindestens einem der verschiedenen Bereiche, die der Rennstrecke (100) zugeordnet sind; und
- Aktivieren mindestens einer Warnvorrichtung auf der Grundlage eines zweiten Satzes von Regeln, wobei der zweite Satz von Regeln mindestens eine zweite Regel umfasst, die eine Warnung auslöst, wenn die erfasste Anomalie (144) einem zweiten vordefinierten Bereich der Rennstrecke (100) zugeordnet wird.

5. Das Verfahren (120) nach einem der Ansprüche 1 bis 4, wobei der Satz der Fahrzeuge (110) einzelne Fahrzeuge (110) umfasst, die an einem Rennen teilnehmen, und die erneute Identifikation des mindestens einen Fahrzeugs (110) unter Verwendung eines neuronalen Netzes (160) durchgeführt wird, das offline trainiert wurde, insbesondere vor der Verwendung eines Überwachungssystems (180), um das mindestens eine Fahrzeug (110) in der Bildsequenz (132, 134, 136) in dem Rennen zu erkennen, unter Verwendung eines Kodierer/Dekodierer-Modells, um spezifische Fahrzeuge aus einer gegebenen Klasse von Objekten zu identifizieren, insbesondere von Formel-1-Autos, normalen Straßenfahrzeugen, Motorrädern.

6. Das Verfahren (120) nach Anspruch 5, wobei das Training des neuronalen Netzes (160) unüberwacht durchgeführt wird und die folgenden Schritte umfasst:
- Empfangen von Bildern auf einer Eingangsseite (162) des neuronalen Netzes (160) und Vereinfachen der empfangenen Bilder durch Knoten (164) des neuronalen Netzes (160), um einen Einbettungsvektor (166) zu bilden oder zu kodieren;
- Informationen des Einbettungsvektors (166) zu decodieren, um ein Bild auf einer Decoder- oder Ausgangsseite (168) des neuronalen Netzes (160) wiederherzustellen;
- Variieren von Gewichten und anderen Einstellungen des neuronalen Netzes (160), bis ein Unterschied zwischen den auf der Eingangsseite (162) empfangenen Bildern und den neu erzeugten Bildern sehr klein oder minimal wird, basierend auf einem automatischen Vergleich der Eingangsseite (162) und der Ausgangsseite (168) unter Verwendung einer geeigneten Ähnlichkeitsmetrik.

7. Das Verfahren (120) nach Anspruch 5 oder 6 ferner umfassend:
- in einer Trainingsstufe, Bereitstellung einer großen Anzahl von Trainingsbildern verschiedener Fahrzeuge (110) für einen Encoder oder eine Eingangsseite (162) des neuronalen Netzes (160), insbesondere von manuell ausgewählten oder bestätigten Trainingsbildern, die an der Rennstrecke (100) aufgenommen wurden;
- während einer anfänglichen Registrierungsphase, bevor das mindestens eine Fahrzeug (110) in die Rennstrecke (100) einfährt, Aufnehmen und Verarbeiten des mindestens einen Bildes des mindestens einen Fahrzeugs (110) durch das zuvor trainierte neuronale Netzwerk (160), um den mindestens einen Referenzeinbettungsvektor (172, 174) zu berechnen; und
- während der erneuten Identifizierung des mindestens einen Fahrzeugs (110), sobald sich das mindestens eine Fahrzeug (110) auf der Rennstrecke (100) befindet, Einspeisen von Teilen eines Bildes, das dem mindestens einen erfassten Fahrzeug (110) entspricht, in das neuronale Netz (160), um einen neuen Einbettungsvektor (176) zu bestimmen, Vergleichen des neuen Einbettungsvektors (176) mit einem Satz von zuvor registrierten Einbettungsvektoren (172, 174), die den mindestens einen Referenz-Einbettungsvektor (172, 174) umfassen, und Identifizieren des mindestens einen Fahrzeugs (110) als das Fahrzeug, das dem Satz von nächstgelegenen zuvor registrierten Einbettungsvektoren (172, 174) entspricht.

8. Das Verfahren (120) nach Anspruch 7, wobei
- wenn sich der neue Einbettungsvektor (176) von den nächsten zuvor registrierten Einbettungsvektoren (172, 174) um mehr als einen ersten voreingestellten Schwellenwert unterscheidet, wird der neue Einbettungsvektor (176) in einem Array von Vektoren (178) gespeichert, die einem bestimmten Fahrzeug (110) entsprechen.

9. Das Verfahren (120) nach Anspruch 7 oder 8, wobei
- wenn sich der neue Einbettungsvektor (176) von jedem der zuvor registrierten Einbettungsvektoren (172, 174) um mehr als einen zweiten voreingestellten Schwellenwert unterscheidet, die Identifizierung fehlschlägt und/oder der neue Einbettungsvektor (176) nicht in das Array von Vektoren (178) aufgenommen wird.

10. Das Verfahren (120) nach einem der Ansprüche 1 bis 9, ferner umfassend:
- Extrahieren mindestens eines charakteristischen Merkmals, insbesondere eines Kennzeichens oder einer anderen Registrierungsnummer des mindestens einen Fahrzeugs (110), aus dem mindestens einen Bild, das aufgenommen wird, wenn das mindestens eine Fahrzeug (110) in die Rennstrecke (100) oder den überwachten Teil der Rennstrecke (100) einfährt, wobei das mindestens eine charakteristische Merkmal in dem Schritt der erneuten Identifizierung des mindestens einen Fahrzeugs (110) verwendet wird.

11. Das Verfahren (120) nach einem der Ansprüche 1 bis 10, wobei der vordefinierte Satz von Fahrzeugen (110) einer Teilmenge aller Fahrzeuge (110) entspricht, die entsprechende digitale Zwillinge in der digitalen Darstellung der Rennstrecke (100) haben, und wobei die Teilmenge auf der Grundlage eines dritten Satzes von Regeln ausgewählt wird, die eine Wahrscheinlichkeit der erneuten Identifizierung eines gegebenen Fahrzeugs (110) auf der Grundlage der Daten des entsprechenden digitalen Zwillings in einer Bildsequenz (132, 134, 136) bereitstellt, die dem mindestens einen Abschnitt (130) der Rennstrecke (100) entspricht.

12. Das Verfahren (120) nach einem der Ansprüche 1 bis 11, das ferner umfasst:
- Auswählen einer Vielzahl von Bildsequenzen (132, 134, 136) von einer Vielzahl von Kameras (182), die verschiedene Abschnitte (130) der Rennstrecke (100) erfassen, basierend auf der erneuten Identifizierung von mindestens einem bestimmten Fahrzeug (110) in jeder der Vielzahl von Sequenzen; und
- Schneiden der Vielzahl von Sequenzen, um Filmmaterial des mindestens einen bestimmten Fahrzeugs (110) zu erzeugen, das auf der Rennstrecke (100) fährt.

13. Ein Überwachungssystem (180) für eine Rennstrecke (100), umfassend:
- eine oder mehrere Kameras (182), wobei jede Kamera (182) ein Sichtfeld hat, das mindestens einen Abschnitt (130) der Rennstrecke (100) abdeckt;
- ein Bilderfassungssystem, das so konfiguriert ist, dass es mindestens eine Folge von Bildern (132, 134, 136) von mindestens einer der Kameras (182) erhält; und
- ein Bildverarbeitungssystem mit mindestens einem Prozessor, wobei der Prozessor so konfiguriert ist, dass er das Verfahren nach einem der Ansprüche 1 bis 12 durchführt.

14. Das Überwachungssystem (180) nach Anspruch 13, das ferner Folgendes umfasst:
- eine oder mehrere Warnvorrichtungen, die so konfiguriert sind, dass sie aktiviert werden, wenn eine erste Warnung auf der Grundlage eines ersten Satzes von Regeln ausgelöst wird, wobei der erste Satz von Regeln mindestens eine erste Regel umfasst, die eine erste Warnung auslöst, wenn mindestens ein erfasstes Fahrzeug (110) einem ersten vordefinierten Bereich der Rennstrecke (100), insbesondere einer Leitplanke (108) oder einem Sperrbereich, zugeordnet ist.

15. Das Überwachungssystem (180) nach Anspruch 13 oder 14, das ferner Folgendes umfasst:
- eine oder mehrere Warnvorrichtungen, die so konfiguriert sind, dass sie aktiviert werden, wenn eine zweite Warnung auf der Grundlage eines zweiten Satzes von Regeln ausgelöst wird, wobei der zweite Satz von Regeln mindestens eine zweite Regel umfasst, die eine Warnung auslöst, wenn eine erfasste Anomalie (144) einem zweiten vordefinierten Bereich der Rennstrecke (100) zugeordnet ist.

## Revendications

1. Procédé de traitement électronique (120) pour la surveillance d'une piste de course (100), comprenant :
- l'obtention (121) d'au moins une séquence d'images (132, 134, 136) d'une caméra (182) capturant au moins une section (130) de la piste de course (100) ;
- détecter (123) au moins un véhicule (110) dans la séquence d'images (132, 134, 136) à l'aide de la reconnaissance automatique d'objets ;
- réidentifier l'au moins un véhicule (110) en tant que véhicule spécifique d'un ensemble prédéterminé de véhicules à l'aide de l'intégration, en calculant au moins un vecteur d'intégration de référence (172, 174) pour l'intégration sur la base d'au moins une image prise lorsque l'au moins un véhicule (110) entre sur la piste de course (100) ou sur la partie surveillée de la piste de course (100) ;
- la mise en correspondance (124) du véhicule réidentifié (110) avec un jumeau digital correspondant dans une représentation digitale de la piste de course (100) ;
- déterminer une première position réelle du véhicule réidentifié (110) sur la base d'une relation de mappage et ajouter la première position et l'information d'horodatage au jumeau digital correspondant chaque fois qu'une première position réelle d'un véhicule réidentifié (110) est déterminée, de manière à stocker un historique du véhicule respectif (110) dans la représentation digitale de la piste de course (100), dans laquelle la relation de mappage fait correspondre une pluralité de zones de pixels dans les images (132, 134, 136) de l'au moins une séquence d'images à une pluralité correspondante de positions réelles de la section correspondante (130) de la piste de course (100) capturée par la caméra (182) ;
- détection d'une anomalie (144) le long de la piste de course (100) sur la base d'une comparaison d'au moins deux images (132, 136) de l'au moins une séquence d'images (132, 134, 136) ;
- classer l'anomalie détectée (144) comme acceptable ou inacceptable, une anomalie détectée (144) étant classée comme inacceptable si elle est classée, sur la base de la reconnaissance automatique des formes, comme une pièce de véhicule, de l'huile et/ou du gravier ;
- déterminer une deuxième position dans le monde réel d'au moins une anomalie inacceptable (144) détectée le long de la piste de course (100) sur la base de la relation de mise en correspondance, et ajouter la deuxième position et les informations d'horodatage à une représentation digitale correspondante d'au moins une anomalie inacceptable (144) détectée le long de la piste de course (100) ;
- corréler la première et la deuxième position et les informations d'horodatage, de manière à identifier un véhicule (110) susceptible d'avoir causé l'au moins une anomalie inacceptable (144) ; et
- afficher la position des véhicules détectés (110) et des anomalies (144) sur une représentation visuelle de la piste de course (100).

2. Procédé (120) de la revendication 1, comprenant en outre :
- segmenter (122) les images de la séquence d'images (132, 134, 136) en différentes zones associées à la piste de course (100) ; et
- activer (126) au moins un dispositif d'avertissement sur la base d'un premier ensemble de règles, dans lequel le premier ensemble de règles comprend au moins une première règle déclenchant un premier avertissement si l'au moins un véhicule détecté (110) est mappé dans une première zone prédéfinie de la piste de course (100), en particulier une glissière de sécurité (108) ou une zone hors limites.

3. Procédé (120) de la revendication 2, dans laquelle les zones de la piste de course (100) comprennent au moins l'un des éléments suivants : une surface de conduite (102), une voie, une limite de la piste, une barrière de sécurité (108), une zone de sortie de piste, une zone hors limites, une zone de stands, une zone d'observation, une zone goudronnée, une zone de gravier (106), une zone de terre, une zone herbeuse (104) et une zone forestière.

4. Procédé (120) de la revendication 2 ou 3, comprenant en outre :
- le mappage de l'anomalie détectée (144) à au moins une des différentes zones associées à la piste de course (100) ; et
- activer au moins un dispositif d'avertissement sur la base d'un deuxième ensemble de règles, dans lequel le deuxième ensemble de règles comprend au moins une deuxième règle déclenchant un avertissement si l'anomalie détectée (144) est mappée dans une deuxième zone prédéfinie de la piste de course (100).

5. Procédé (120) selon l'une des revendications 1 à 4, dans lequel l'ensemble de véhicules (110) comprend des véhicules individuels (110) participant à une course, et la réidentification du au moins un véhicule (110) est mise en oeuvre à l'aide d'un réseau neuronal (160) qui a été entraîné hors ligne, en particulier avant l'utilisation d'un système de surveillance (180) pour détecter l'au moins un véhicule (110) dans la séquence d'images (132, 134, 136) de la course, à l'aide d'un modèle codeur/décodeur pour identifier des véhicules spécifiques d'une classe d'objets donnée, en particulier l'une des voitures de Formule 1, des voitures de route normales, des motocyclettes.

6. Procédé (120) de la revendication 5, dans laquelle l'entraînement du réseau neuronal (160) est effectué de manière non supervisée et comprend les étapes suivantes :
- recevoir des images sur un côté d'entrée (162) du réseau neuronal (160) et simplifier les images reçues par des noeuds (164) du réseau neuronal (160) pour former ou coder un vecteur d'intégration (166) ;
- décoder les informations du vecteur d'intégration (166) pour recréer une image sur un décodeur ou côté sortie (168) du réseau neuronal (160) ;
- varier les poids et autres paramètres du réseau neuronal (160) jusqu'à ce qu'une différence entre les images reçues sur la face d'entrée (162) et les images recréées devienne très faible ou minimale, sur la base d'une comparaison automatique de la face d'entrée (162) et de la face de sortie (168) à l'aide d'une métrique de similarité appropriée.

7. Procédé (120) de la revendication 5 ou 6, comprenant en outre :
- dans une phase d'entraînement, fournir un grand nombre d'images d'entraînement de différents véhicules (110) à un encodeur ou côté entrée (162) du réseau neuronal (160), en particulier des images d'entraînement sélectionnées ou confirmées manuellement et prises sur la piste de course (100) ;
- au cours d'une étape d'enregistrement initial avant que le moins un véhicule (110) n'entre sur la piste de course (100), prise et traitement, par le réseau neuronal (160) précédemment entraîné, de la moins une image du moins un véhicule (110) pour calculer le au moins un vecteur d'intégration de référence (172, 174) ; et
- lors de la réidentification du moins de véhicules (110) une fois que le moins de véhicules (110) se trouve sur la piste de course (100), introduire des parties d'une image correspondant au moins à un véhicule détecté (110) dans le réseau neuronal (160) afin de déterminer un nouveau vecteur d'intégration (176), comparer le nouveau vecteur d'intégration (176) à un ensemble de vecteurs d'intégration précédemment enregistrés (172, 174), comprenant au moins un vecteur d'intégration de référence (172, 174), et identifier l'au moins un véhicule (110) comme étant le véhicule correspondant au vecteur le plus proche de l'ensemble de vecteurs d'intégration précédemment enregistrés (172, 174).

8. Procédé (120) de la revendication 7, dans laquelle
- si le nouveau vecteur d'intégration (176) diffère des vecteurs d'intégration les plus proches précédemment enregistrés (172, 174) de plus d'une première valeur seuil prédéfinie, le nouveau vecteur d'intégration (176) est stocké dans un tableau de vecteurs (178) correspondant à un véhicule donné (110).

9. Procédé (120) de la revendication 7 ou 8, dans laquelle
- si le nouveau vecteur d'intégration (176) diffère de chacun des vecteurs d'intégration précédemment enregistrés (172, 174) de plus d'une deuxième valeur seuil prédéfinie, l'identification échoue et/ou le nouveau vecteur d'intégration (176) n'est pas inclus dans le tableau de vecteurs (178).

10. Procédé (120) selon l'une des revendications 1 à 9, comprenant en outre :
- extraction d'au moins un élément caractéristique, en particulier une plaque d'immatriculation ou un autre numéro d'enregistrement du véhicule (110), à partir d'au moins une image prise lorsque le véhicule (110) entre sur la piste de course (100) ou la partie surveillée de la piste de course (100), l'élément caractéristique étant utilisé dans l'étape de réidentification du véhicule (110) .

11. Procédé (120) selon l'une des revendications 1 à 10, où l'ensemble prédéfini de véhicules (110) correspond à un sous-ensemble de tous les véhicules (110) ayant des jumeaux digitales correspondants dans la représentation digitale de la piste de course (100), et où le sous-ensemble est sélectionné sur la base d'un troisième ensemble de règles fournissant une probabilité de réidentifier un véhicule donné (110) dans une séquence d'images (132, 134, 136) correspondant à au moins une section (130) de la piste de course (100) sur la base des données du jumeau digital correspondant.

12. Procédé (120) de l'une quelconque des revendications 1 à 11, comprenant en outre :
- sélection d'une pluralité de séquences d'images (132, 134, 136) provenant d'une pluralité de caméras (182) capturant différentes sections (130) de la piste de course (100) sur la base de la réidentification d'au moins un véhicule spécifique (110) dans chacune de la pluralité de séquences ; et
- découper la pluralité de séquences pour générer des images d'au moins un véhicule spécifique (110) roulant sur la piste de course (100).

13. Système de surveillance (180) pour une piste de course (100), comprenant :
- une ou plusieurs caméras (182), chaque caméra (182) ayant un champ de vision couvrant au moins une section (130) de la piste de course (100) ;
- un système de capture d'images configuré pour obtenir au moins une séquence d'images (132, 134, 136) à partir d'au moins une des caméras (182) ; et
- un système de traitement d'images comprenant au moins un processeur, le processeur étant configuré pour exécuter le procédé selon l'une des revendications 1 à 12.

14. Système de surveillance (180) de la revendication 13, comprenant en outre :
- un ou plusieurs dispositifs d'avertissement configurés pour être activés lorsqu'un premier avertissement est déclenché sur la base d'un premier ensemble de règles, dans lequel le premier ensemble de règles comprend au moins une première règle déclenchant un premier avertissement si au moins un véhicule détecté (110) est mappée dans une première zone prédéfinie de la piste de course (100), en particulier une glissière de sécurité (108) ou une zone hors-limites.

15. Système de surveillance (180) de la revendication 13 ou 14, comprenant en outre :
- un ou plusieurs dispositifs d'avertissement configurés pour être activés lorsqu'un deuxième avertissement est déclenché sur la base d'un deuxième ensemble de règles, dans lequel le deuxième ensemble de règles comprend au moins une deuxième règle déclenchant un avertissement si une anomalie détectée (144) est mappée dans une deuxième zone prédéfinie de la piste de course (100).
